# EUROPEAN PATENT APPLICATION

(11) **EP 4 696 740 A1**
(43) Date of publication of application: **18.02.2026**
(21) Application number: 24194126.9
(22) Date of filing: 12.08.2024
(51) Int. Cl.: C08K 5/098, C08K 5/134, C08K 5/526, C08J 3/22

(54) **ENVIRONMENTALLY FRIENDLY PROCESSING AID BASED ON A FATTY ACID SALT**

(71) Applicant: BASF SE, 67056 Ludwigshafen am Rhein (DE)
(72) Inventor: MENOZZI, Edoardo, 5082 Kaisten (CH); TUERKOGLU, Gazi, 67056 Ludwigshafen am Rhein (DE); OLIVERA, Juan Marcos, 1900 La plata (AR); HEITKAMP, Sebastian, 5082 Kaisten (CH)
(74) Representative: BASF IP Association

(57) **Abstract**

The present invention relates to a use of a processing aid comprising a fatty acid salt to improve the flow properties of a melt comprising a thermoplastic polymer; and to a process for improving the flow properties of a melt comprising a thermoplastic polymer, which comprises the step of incorporating an processing aid comprising a fatty acid salt into the thermoplastic polymer prior to or during melt processing.

## Description

The present invention relates to a use of a processing aid comprising a fatty acid salt to improve the flow properties of a melt comprising a thermoplastic polymer; and to a process for improving the flow properties of a melt comprising a thermoplastic polymer, which comprises the step of incorporating an processing aid comprising a fatty acid salt into the thermoplastic polymer prior to or during melt processing.

The flow characteristics of polymer melts have paramount significance for the design and operating conditions of industrial processing equipment, and may tremendously affect the overall properties of manufactured polymer articles. Polymer melts typically exhibit a non-Newtonian behavior; i.e. their apparent viscosity is strongly dependent on the shear rate applied when processing polymers at temperatures well above their melting points. High shear rates result typically from high levels of mechanical energy (pressure and shear) applied for the purpose of extruding, feeding or any sort of transporting polymer melts in the course of the shape-giving process. Furthermore, high shear rates may equally result from high flow rates or high flow velocities when polymer melts are forced to pass through narrow dies, nozzles, cylinder profiles and the like, which can be of round, rectangular, annular, slit-like, or any other irregular shape or low gap-width cross sections.

If inadequate attention is paid to the peculiar rheological properties of polymer melts, this may eventually lead to several negative, and therefore undesired, consequences in the aesthetic or mechanical polymer properties, which are well known in extrusion processes, in particular in the manufacture of profiles, especially thin-walled profiles, cast or blown films. Various defects are commonly referred to as sharkskin, snake-skin or orange-peel. These terms are figurative and self-explanatory descriptions of melt fracture phenomena which become more and more apparent when high shear rates cause visible roughness or even cracks and crevices on the polymer surface, so that the optical and mechanical properties of the manufactured polymer article are heavily deteriorated.

A particular case concerns polyolefins, among them linear polyethylene, such as linear low-density polyethylene (LLDPE), a widely applied commodity polymer but known for its difficult melt processability. Several polyolefins, especially LLDPE, are prone to melt fracture (MF) due to their relatively narrow molecular weight distribution and to the specific entanglement features of their polymeric chains.

While there is consensus that fluorine-based polymers incorporated into LLDPE im-prove the appearance of extrudates at high output rates and reduce the polymer melt viscosity, these products are also known for several shortcomings, such as the long onset time until such processing aids perform as expected (i.e. until MF is eliminated or its occurrence postponed to significantly higher shear rates, and/or until the energy consumption for compounding at a given throughput gets significantly reduced). Purging, removing or cleaning after processing such polymers containing fluorine-based polymers is very time consuming, i.e. when passing from one production run to another one. In addition, such fluorine-based processing aids are often produced from the precursor perfluorooctaonic acid (PFOA) which appears to be very persistent in the environment and is suspected to be detrimental to the health.

Apart from fluorine-based polymer processing aids, the use of silicone-based polymers or of polyethylene glycol, or waxes is also known in the art. Not only are the benefits of such products not always prominent, as the performance at given concentration can be inferior to fluorine-based polymer processing aids and because they may not display their efficiency on all equipment. Silicone-based polymers or those based on polyethylene glycol present further drawbacks such as the apparition of undesired streaks in the final product, for instance in films, the development of fumes, or plate out on calendring rolls.

The object was to overcome the above mentioned drawbacks.

The object was solved by a use of a processing aid comprising a fatty acid salt to improve the flow properties of a melt comprising a thermoplastic polymer.

The object was also solved by a process for improving the flow properties of a melt comprising a thermoplastic polymer, which comprises the step of incorporating a processing aid comprising a fatty acid salt as defined in any of the preceding claims into the thermoplastic polymer prior to or during melt processing, where the thermoplastic polymer is free of a fluorine-based polymer and free of polyethylene glycols.

The improve flow property is preferably a reduced melt fracture. The reduced melt fracture can be analyzed visually, e.g. by analyzing the time until a shark-skin disappears from the surface of the melt.

Suitable **fatty acid salts** are metal salts of fatty acids, where the metals can be selected from Group 1 or 2 of the Periodic Table of the Elements (e.g. lithium, sodium, potassium, beryllium, magnesium, or calcium) or from metals with different valence (e.g. aluminum and zinc). Preferred fatty acid salts are calcium or zinc salts of fatty acids.

Suitable fatty acid salts are C₁₂-C₂₂ fatty acids, preferably C₁₄-C₂₀ fatty acids, and in particular C₁₆-C₁₈ fatty acids, which may be linear or branched, and which may be saturated or unsaturated.

In another form fatty acid salts are C₁₂-C₂₂ fatty acids, preferably C₁₄-C₂₀ fatty acids, and in particular C₁₆-C₁₈ fatty acids, which are linear, and which may be saturated or unsaturated.

In another form fatty acid salts are C₁₂-C₂₂ fatty acids, preferably C₁₄-C₂₀ fatty acids, and in particular C₁₆-C₁₈ fatty acids, which are linear, and which may be saturated.

In another form fatty acid salts are C₁₂-C₂₂ fatty acid metal salts, preferably C₁₄-C₂₀ fatty acid metal salts, and in particular C₁₆-C₁₈ fatty acid metal salts, which are linear, and which are saturated or unsaturated.

In another form fatty acid salts are C₁₂-C₂₂ fatty acid metal salts, preferably C₁₄-C₂₀ fatty acid metal salts, and in particular C₁₆-C₁₈ fatty acid metal salts, which are linear, and which are saturated.

In another form fatty acid salts are C₁₂-C₂₂ fatty acid metal salts, preferably C₁₄-C₂₀ fatty acid metal salts, and in particular C₁₆-C₁₈ fatty acid metal salts, which are linear, and which are saturated or unsaturated, and where the metal salt is a calcium or zinc salt.

In another form fatty acid salts are C₁₂-C₂₂ fatty acid metal salts, preferably C₁₄-C₂₀ fatty acid metal salts, and in particular C₁₆-C₁₈ fatty acid metal salts, which are linear, and which are saturated, and where the metal salt is a calcium or zinc salt.

Preferably, the fatty acid salt is a metal salt of a C₁₂-C₂₂ fatty acid. Mixtures of different fatty acid salts are possible.

In particular, the fatty acid salt is a metal stearate, preferably zinc stearate or calcium stearate.

The melt may comprise 0.01 to 4 wt%, preferably 0.05 to 2 wt%, more preferably from 0.1 to 1.5 wt% and in particular from 0.2 to 1.0 wt% of the fatty acid salt.

The processing aid may further comprises a **phosphite or a phosphonate,** preferably a phosphite.

Preferably, the processing aid further comprises a phosphite selected from tris(2,4-di-tert.-butylphenyl)phosphite.

Suitable phosphites and phosphonates are tris alkyl (C12-C15) phosphite, Triisodecyl phosphite, Triisotridecyl phosphite, Dioleyl Hydrogen phosphite, Triisooctyl Phosphite, Heptakis (dipropyleneglycol) Triphosphite, Trilauryl Trithio Phosphite, Tris (Dipropyleneglycol) Phosphite, Dimethyl hydrogen phosphite, Dibutyl hydrogen phosphite, Dilauryl hydrogen phosphite, Tri-C12-C14-phosphite or Bis(2-ethylhexyl) hydrogen phosphite. Other phosphites and phosphonates, which are for instance liquid ones such as Di-n-octyl hydrogen phosphite or Di-iso-octyl hydrogen phosphite, or for example triphenyl phosphite, tris(nonylphenyl) phosphite, Phenyldiisodecyl phosphite, Diphenylisodecyl phosphite, [Triphenyl phosphite, polymer with 1,4-cyclohexanedimethanol and polypropylene glycol, C10-16 alkyl esters (CAS Reg. No. 1821217-71-3)].

Further suitable phosphites or phosphonates are alkyl (C12-C15) bisphenol A phosphite, Alkyl (C10) bisphenol A phosphite, Poly (dipropyleneglycol) phenyl phosphite, Tris (tridecyl) phosphite, Diphenyl phosphite, Dodecyl nonylphenol phosphite blend, Phenyl Neopentylene Glycol Phosphite, Poly 4,4' Isopropylidenediphenol - C10 Alcohol Phosphite, Poly 4,4' Isopropylidenediphenol - C12-15 Alcohol Phosphite, diphenylalkyl phosphites, phenyldialkyl phosphites, C₁₂-C₁₈ alkyl bis[4-(1-methyl-1-phenyl-ethyl)phenyl] phosphite, C₁₂-C₁₈ alkenyl bis[4-(1-methyl-1-phenylethyl)phenyl] phosphite, bis[4-(1-methyl-1-phenyl-ethyl)phenyl] [(E)-octadec-9-enyl] phosphite, decyl bis[4-(1-methyl-1-phenyl-ethyl)phenyl] phosphite, didecyl [4-(1-methyl-1-phenyl-ethyl)phenyl] phosphite, [4-(1-methyl-1-phenylethyl)phenyl] bis[(E)-octadec-9-enyl] phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-di-cumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, [2-tert-butyl-4-[1-[5-tert-butyl-4-di(tridecoxy)phosphanyloxy-2-methyl-phenyl]butyl]-5-methyl-phenyl] ditridecyl phosphite, tristearyl sorbitol triphosphite, a mixture of at least two different tris(mono-C₁-C₈-alkyl)phenyl phosphites such as for example mentioned in US 7468410 B2 as products of examples 1 and 2, a mixture of phosphites comprising at least two different tris(amylphenyl) phosphites such as for example mentioned in US 8008383 B2 as mixtures 14, 15, 16, 17, 18, 19, 20, 21, 22, 23, 24, 25 and 26, a mixture of a least four different phosphites comprising tris[4-(1,1-dimethylpropyl)phenyl] phosphite, [2,4-bis(1,1-dimethylpropyl)phenyl] bis[4-(1,1-dimethylpropyl)phenyl] phosphite, bis[2,4-bis(1,1-dimethylpropyl)phenyl] [4-(1,1-dimethylpropyl)phenyl] phosphite and tris[2,4-bis(1,1-dimethylpropyl)phenyl] phosphite, a mixture of phosphites comprising at least two different tris(butylphenyl) phosphites such as for example mentioned in US 8008383 B2 as mixtures 34, 35, 36, 37, 38, 39 and 40, an oxyalkylene-bridged bis-(di-C₆-aryl) diphosphite or an oligomeric phosphite obtainable by condensation under removal of hydrogen chloride of (i) a trichlorophosphane, with (ii) a dihydroxyalkane interrupted by one or more oxygen atoms and with (iii) a mono-hydroxy-C₆-arene such as for example mentioned in US 8304477 B2 as products of examples 1, 2, 3, 4, 5, 6, 7, 8, 9, 10, 11, 12, 13, 14, 15, 16 and 17, a polymeric phosphite obtainable by transesterification under removal of phenol of (i) triphenyl phosphite with (ii) a dihydroxyalkane optionally interrupted by one or more oxygen atoms and/or a bis(hydroxyalkyl)(alkyl)amine and with (iii) a mono-hydroxyalkane optionally interrupted by one or more oxygen atoms such as for example mentioned in US 8563637 B2 as products of examples 1, 2, 3, 4, 5, 6, 7, 8, 9, 10 and 11, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocine, bis(2,4-di-tert-butyl-6-methylphenyl)-methylbis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocine, 1,3,7,9-tetra-tert-butyl-11-octoxy-5H-benzo[d][1,3,2]benzodioxaphosphocine, 2,2',2"-nitrilo[triethyltris(3,3',5,5'-tetra-tert-butyl-1,1'-biphenyl-2,2'-diyl)phosphite], phosphorous acid, triphenyl ester, polymer with α-hydro-ω-hydroxypoly[oxy(methyl-1,2-ethanediyl)], C10-16-alkyl esters (CAS Reg. No. [1227937-46-3]), 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane, phosphorous acid, mixed 2,4-bis(1,1-dimethylpropyl)phenyl and 4-(1,1-dimethylpropyl)phenyl triesters (CAS Reg. No. [939402-02-5]).

The following phosphites are preferred: Tris(2,4-di-tert-butylphenyl) phosphite, tris(nonylphenyl) phosphite,

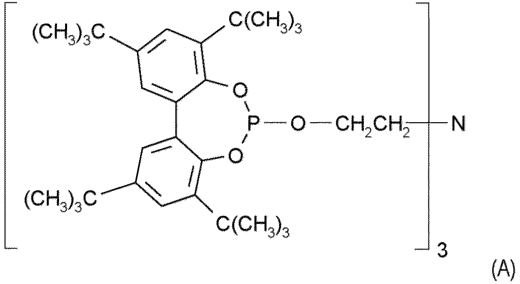

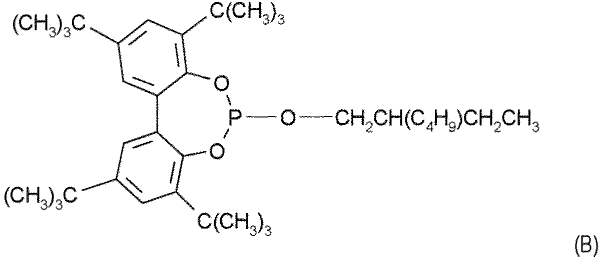

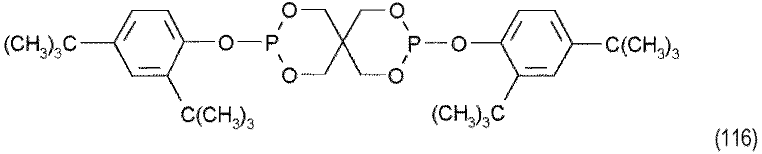

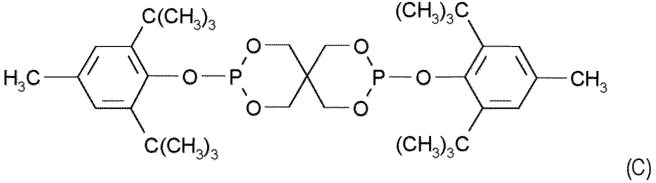

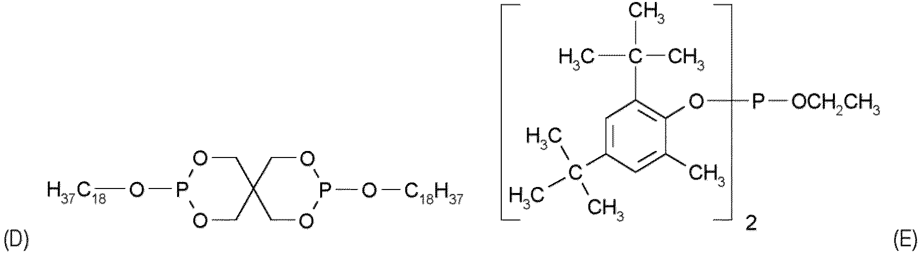

The melt may comprise 0.01 to 4 wt%, preferably 0.05 to 2 wt%, more preferably from 0.1 to 1.5 wt% and in particular from 0.2 to 1.0 wt% of the phosphite or a phosphonate, preferably of the phosphite.

The processing aid may further comprise a **phenolic antioxidants,** preferably an alkylated monophenol, and in particular an ester of β-(3,5-di-tert-butyl-4-hydroxyphenyl)propionic acid with mono- or polyhydric alcohols.

Suitable alkylated monophenols are 2,6-di-tert-butyl-4-methylphenol, 2-tert-butyl-4,6-di-methylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(methylcyclohexyl)-4,6-dimethylphenol, 2,6-dioctadecyl-4-methylphenol, 2,4,6-tricyclohexylphenol, 2,6-di-tert-butyl-4-methoxymethyl-phenol, nonylphenols which are linear or branched in the side chains, for example 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol, 2,4-dimethyl-6-(1'-methyl-1'-tetradecyl-methyl)-phenol and mixtures thereof.

Suitable esters of β-(3,5-di-tert-butyl-4-hydroxyphenyl)propionic acid with mono- or polyhydric alcohols, are for example with methanol, ethanol, n-octanol, i-octanol, a mixture of linear and branched C₇-C₉-alkanol, octadecanol, a mixture of linear and branched C₁₃-C₁₅-alkanol, 1,6-hexanediol, 1,9-nonanediol, ethylene glycol, 1,2-propanediol, neopentyl glycol, thiodiethylene glycol, diethylene glycol, triethylene glycol, tetraethylene glycol, pentaerythritol, tris-(hydroxyethyl)isocyanurate, N,N'-bis-(hydroxy-ethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane. Preferred are esters of β-(3,5-di-tert-butyl-4-hydroxyphenyl)propionic acid, especially with octadecanol.

The melt may comprise 0.01 to 4 wt%, preferably 0.05 to 2 wt%, more preferably from 0.1 to 1.5 wt% and in particular from 0.1 to 0.5 wt% of the phenolic antioxidant.

The processing aid may comprise
- the fatty acid salt and
- the phosphite or phosphonate, preferably the phosphite.

In another form the processing aid may comprise
- the metal salt of the C₁₂-C₂₂ fatty acid and
- the phosphite.

In another form the processing aid may comprise
- the metal salt of the C₁₂-C₂₂ fatty acid and
- the phosphite selected from tris(2,4-di-tert.-butylphenyl)phosphite.

In another form the processing aid may comprise
- the metal stearate, preferably zinc stearate or calcium stearate and
- the phosphite selected from tris(2,4-di-tert.-butylphenyl)phosphite.

The processing aid may comprise
- the fatty acid salt and
- the phosphite or phosphonate, preferably the phosphite,
in a weight ratio from 10:1 to 1:10, preferably from 5:1 to 1:5, and in particular from 3:1 to 1:3.

In another form the processing aid may comprise
- the metal salt of the C₁₂-C₂₂ fatty acid and
- the phosphite

in a weight ratio from 10:1 to 1:10, preferably from 5:1 to 1:5, and in particular from 3:1 to 1:3.

In another form the processing aid may comprise
- the metal salt of the C₁₂-C₂₂ fatty acid and
- the phosphite selected from tris(2,4-di-tert.-butylphenyl)phosphite
in a weight ratio from 10:1 to 1:10, preferably from 5:1 to 1:5, and in particular from 3:1 to 1:3.

In another form the processing aid may comprise
- the metal stearate, preferably zinc stearate or calcium stearate and
- the phosphite selected from tris(2,4-di-tert.-butylphenyl)phosphite
in a weight ratio from 10:1 to 1:10, preferably from 5:1 to 1:5, and in particular from 3:1 to 1:3.

The processing aid may comprise
- the fatty acid salt and
- the phosphite or phosphonate, preferably the phosphite, and
- the phenolic antioxidants, preferably the alkylated monophenol, and in particular the ester of β-(3,5-di-tert-butyl-4-hydroxyphenyl)propionic acid with mono- or polyhydric alcohols.

In another form the processing aid may comprise
- the metal salt of the C₁₂-C₂₂ fatty acid and
- the phosphite, and
- the phenolic antioxidants, preferably the alkylated monophenol, and in particular the ester of β-(3,5-di-tert-butyl-4-hydroxyphenyl)propionic acid with mono- or polyhydric alcohols.

In another form the processing aid may comprise
- the metal salt of the C₁₂-C₂₂ fatty acid and
- the phosphite selected from tris(2,4-di-tert.-butylphenyl)phosphite, and
- the phenolic antioxidants, preferably the alkylated monophenol, and in particular the ester of β-(3,5-di-tert-butyl-4-hydroxyphenyl)propionic acid with mono- or polyhydric alcohols.

In another form the processing aid may comprise
- the metal stearate, preferably zinc stearate or calcium stearate and
- the phosphite selected from tris(2,4-di-tert.-butylphenyl)phosphite, and
- the phenolic antioxidants, preferably the alkylated monophenol, and in particular the ester of β-(3,5-di-tert-butyl-4-hydroxyphenyl)propionic acid with mono- or polyhydric alcohols.

The weight ratio of the phenolic antioxidants, preferably the alkylated monophenol, and in particular the ester of β-(3,5-di-tert-butyl-4-hydroxyphenyl)propionic acid with mono- or polyhydric alcohols, to the fatty acid salt may be from 3:1 to 1:8, preferably from 2:1 to 1:5, and in particular from 1:1 to 1:3.

Preferably the melt is **free of fluorine-based polymers,** such as per- and polyfluoroalkyl substances (also known as PFAS). Examples of fluorine-based polymers are elastomeric fluoropolymers (i. e. fluoroelastomers or amorphous fluoropolymers) and thermoplastic fluoropolymers (i. e. semi-crystalline fluoropolymers). Fluoroelastomers are fluoropolymers that are normally in the fluid state at room temperature and above, i. e. fluoropolymers which have Tg values below room temperature and which exhibit little or no crystallinity at room temperature. Fluorinated monomers which may be copolymerized to yield suitable fluoroelastomers include vinylidene fluoride, hexafluoropropylene, chlorotrifluoroethylene, tetrafluoroethylene and perfluoroalkyl perfluorovinyl ethers. Specific examples of the fluoroelastomers include copolymers of vinylidene fluoride and a comonomer selected from hexafluoropropylene, chlorotrifluoroethylene, 1-hydropentafluoropropylene, and 2hydropentafluoropropylene ; copolymers of vinylidene fluoride, tetrafluoroethylene, and hexafluoropropylene or 1-or 2- hydropentafluoropropylene; and copolymers of tetrafluoroethylene, propylene and, optionally, vinylidene fluoride. Suitable semi-crystalline fluoropolymers are poly (vinylidene fluoride), homopolymers and copolymers of tetrafluoroethylene (such as Teflon FEP fluorocarbon resin, and copolymers of tetrafluoroethylene, propylene and, optionally, vinylidene fluoride).

Examples of suitable **thermoplastic polymers** are:
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, **polyethylene** (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, Vlb or VIII of the Periodic Table. These metals usually have one or more than one ligand, typically oxides, halides, alcoholates, esters, ethers, amines, alkyls, alkenyls and/or aryls that may be either 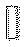 - or 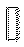 -coordinated. These metal complexes may be in the free form or fixed on substrates, typically on activated magnesium chloride, titanium(iii) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups la, Ila and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly( 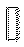 -methylstyrene).
6. Aromatic homopolymers and copolymers derived from vinyl aromatic monomers including styrene, 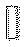 -methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
   6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
   6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
   6c. Hydrogenated aromatic polymers derived from hydrogenation of polymers mentioned under 6a.).
      Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or 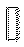 -methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Chlorine-containing polymers such as polychloroprene, chlorinated rubbers, chlorinated copolymer of isobutylene-isoprene (halobutyl rubber), chlorinated or sulfochlorinated polyethylene, copolymers of ethylene and chlorinated ethylene, epichlorohydrin homo- and copolymers, especially polymers of chlorine-containing vinyl compounds, for example polyvinyl chloride, polyvinylidene chloride, as well as copolymers thereof such as vinyl chloride/vinylidene chloride, vinyl chloride/vinyl acetate or vinylidene chloride/vinyl acetate copolymers.
9. Polymers derived from 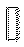 , 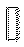 -unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polyketones.
21. Polysulfones, polyether sulfones and polyether ketones.
22. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.

The thermoplastic polymer can be virgin or a **recycled polymer,** which may be obtainable from domestic, commercial and industrial waste or from useful material collections. The recycled polymer may originate from separation and sorting, or from specific industrial sectors and return obligations, for example from the automobile industry, electrical/electronic industry, construction, agriculture and the textile industry, or from households and commerce (for example supermarkets).

For example the thermoplastic polymer is polypropylene, polyethylene, any polypropylene copolymer or any polyethylene copolymer or any of their blends.

Preferably the thermoplastic polymer is a linear low density polyethylene (LLDPE).

The processing aid may be added directly to the **extruder** together with the thermoplastic polymer or it may be premixed with the thermoplastic polymer and then added to the extruder.

Optionally, an **interfacial agent** can be incorporated in the composition. The role of a interfacial agent may be the reduction of the onset time or induction time until the processing aid effect is observable, or to further lower the melt viscosity or energy consumption required for compounding the polymer, or for enhanced processability. The interfacial agent often is a relatively low molecular weight ingredient which, for a particular system of processing aid plus thermoplastic polymer, preferentially locates at the interface between these two polymers. The interfacial agent may be introduced to the polymer at any point up to and including the final melt shaping process. It is most desirable to combine the interfacial agent in a masterbatching step where both ingredients are present at high concentration (i. e. at a concentration greater than or equal to 0.5 wt. %, based on the total weight of masterbatch).

Possible interfacial agent are, among others, thermoplastic polymers which are characterized by 1) being in the liquid state (or molten) at the extrusion temperature, 2) having a lower melt viscosity than both the melt processable polymer and the comb or comb block copolymer process aid, and 3) freely wets the surface of the comb or comb block copolymer particles in the extrudable composition.

Examples of such interfacial agent include, but are not limited to i) silicone-polyether copolymers; ii) aliphatic polyesters such as poly (butylene adipate), poly (lactic acid) and polycaprolactone polyesters; iii) aromatic polyesters such as phthalic acid diisobutyl ester; iv) polyether polyols (preferably, not a polyalkylene oxide) such as poly (tetramethylene ether glycol); v) amine oxides such as octyldimethyl amine oxide; vi) carboxylic acids such as hydroxybutanedioic acid; vii) fatty acid esters such as sorbitan monolaurate and triglycerides; and vii) poly(oxyalkylene) polymers, including polyethylene glycols and their derivatives.

Preferred aliphatic interfacial agent are polyethylene glycol having a number average molecular weight in the range 4000 to 20 000, preferably 5000 to 15 000, and most preferably 6000 to 10000.

The thermoplastic polymer may comprise a **further additive** such as antioxidant, UV absorber, light stabilizer, metal deactivator, peroxide scavenger, nucleating agent, filler, reinforcing agent, a partitioning agent, preferably an inorganic partitioning agent, such as calcium carbonate, silicon oxide, talc or any combination thereof.

For ease of processing, the processing aid are often used in the form of a **masterbatch,** rather than neat, when they are added to the polymer. Within the scope of this invention, a masterbatch is usually a mixture of the processing aid in a carrier polymer. The carrier polymer can be the same polymer that is to be extruded, or it can be a second polymer that does not deleteriously affect the extrusion behaviour of the thermoplastic polymer that is to be extruded.

Masterbatches typically contain 0.5-50 wt. %, preferably 1-30 wt. % of the processing aid, based on the total weight of the masterbatch. Masterbatches can be made, for example, by mixing the appropriate amount of the processing aid with carrier polymer in a mixer (e.g. Banbury mixer) or a co-rotating twin screw extruder, at a temperature above the melting point of the polymer.

Typically such a masterbatch contains a) the carrier polymer, b) 0.5 to 50 weight percent of the the processing aid, and optionally c) an effective amount of a interfacial agent.

Preferably, the melt is processed by extrusion, such as film extrusion (cast film; blown film), fiber extrusion, pipe extrusion, profile extrusion, sheet extrusion; or tape extrusion.

The invention also relates to a **process for improving the flow properties** of a melt comprising a thermoplastic polymer, which comprises the step of incorporating the processing aid comprising the fatty acid salt into the thermoplastic polymer prior to or during melt processing (preferably extrusion), where the thermoplastic polymer is free of a polymer processing aid, preferably of a fluorine-based polymer.

The melt processing is preferably an extrusion, such as film extrusion (cast film; blown film), fiber extrusion, pipe extrusion, profile extrusion, sheet extrusion; or tape extrusion.

### Examples

| | |
|---|---|
| Polyethylene A: | a commercial LLDPE, Petrothene^{®} GA1810, from LyondellBasell. |
| Polyethylene B: | a commercial LDPE, Exxonmobil LD 251, from ExxonMobil. |
| Polyethylene C: | a commercial LDPE SABIC LDPE 2404N0, from Sabic. |
| Fluoro-PA: | processing aid masterbatch (20% in LLDPE) containing Dynamar^{®} FX 5920A, from the company 3M, comprising a vinylidene fluoride-hexafluoropropylene fluoroelastomer (25-35 wt%), an interfacial agent like PEG (60-70 wt%) and <5 wt% of partitioning agents like Talc and calcium. The masterbatch has an MFI (190°C /2.16Kg): 2.4g/10min |
| PEG1-PA: | processing aid, hydroxy-terminated polyethylene glycol, average molecular weight 9000 g/mol. |
| PEG2-PA: | processing aid, polyethylene glycol-co-polypropylene glycol (1750 g/mol)-co-polyethylene glycol block copolymer, molar mass about 8000 g/mol. |
| FAS-PA: | processing aid obtained by blending calcium stearate (40 wt%), tris(2,4-di-tert.-butylphenyl)phosphite (40 wt%), and C₁₈ alkyl-3-(3,5-di-tert.butyl-4-hydroxyphenyl)-propionate (20wt%). |

### Example 1: Preparation of masterbatches

The Polyethylene A or B of C and processing aids were blended in the amounts as indicated in Table 1 and then melt compounded into pellets on a 25 mm co-rotating twin-screw extruder Berstorff ZE25A x 47D, operating at 160 revolutions per minute (rpm) and at set temperatures of 190 °C, and extruded into pellets.

**Table 1: Composition of masterbatches**

| | MB-A | MB-B | MB-C | MB-D |
|---|---|---|---|---|
| Polyethylene A | 97% | | 95% | |
| Polyethylene B | | 90% | | |
| Polyethylene C | | | | 80% |
| FAS-PA | | 10% | | 20% |
| PEG1-PA | 3% | | | |
| PEG2-PA | | | 5% | |

### Example 2: Performance as processing aid in extruded monofilament

The pelletized masterbatch from Example 1 and Polyethylene A were dry blended in the amounts as indicated in Table 2 and melt processed into monofilament through a 1.5 mm die on a 20 mm single screw extrusion, Extrusionmeter 20D at set temperatures of 220 °C.

For each masterbatch tested, the time until the melt fracture or shark-skin was eliminated from extruded monofilament was recorded in Table 2.

Between each formulations the extruder was purged with Polyethylene A for 1h and only after the subsequent formulation was tested.

The masterbatches MB-B, MB-C and MB-D increased significantly the processing performance of the thermoplastic polymer.

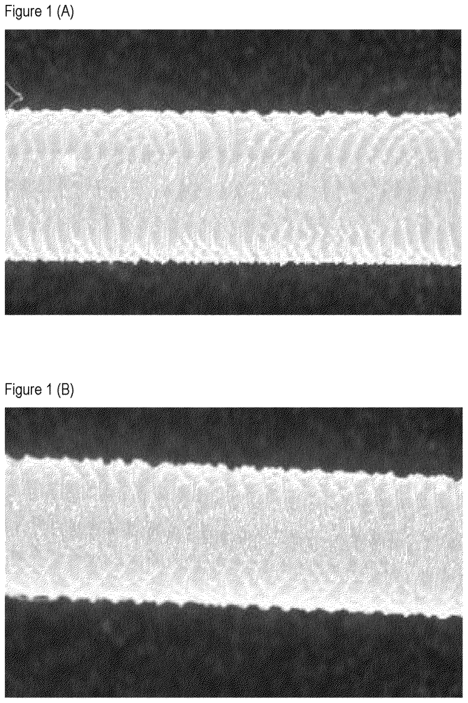

In Figure 1 a photograph of Monofilament Sample 1 (comparative) after 40 min (A) and after 100 min (B) is shown. It showed that even after 100 min the shark skin was not eliminated.

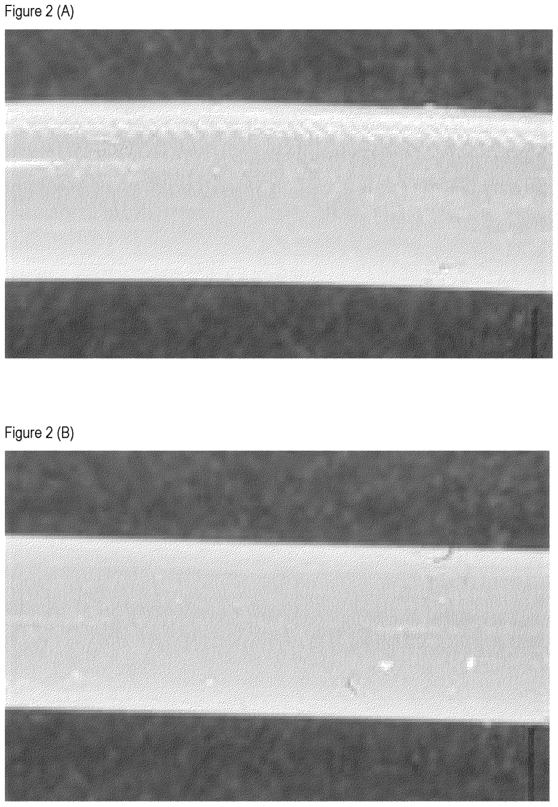

In Figure 2 a photograph of Monofilament Sample 3 after 5 min (A) and after 20 min (B) is shown. It showed that already after 20 min the shark skin was no longer visible.

**Table 2**

| Monofilament Sample | Masterbatch | Time until Shark-Skin no longer visible |
|---|---|---|
| 1 ^{a)} | --- | Shark skin not eliminated |
| 2 ^{a)} | 1 % Fluoro-PA | 40 min |
| 3 | 1.5% MB-B | 20 min |
| 4 | 2.0% MB-B | 40 min |
| 5 | 3.5% MB-A + 1.2% MB-B | 5 min |
| 6 | 5.0% MB-A + 1.0% MB-B | 60 min |
| 7 | 2.0% MB-C + 1.2% MB-B | 40 min |
| 8 | 3.0% MB-C + 1.0% MB-B | 40 min |

| | | |
|---|---|---|
| a) Comparative | | |

### Example 3: Performance as processing aid in blown films

The pelletized masterbatch from Example 1 and LLDPE (Exxonmobil LL 1001 XV) were dry blended in the amounts as indicated in Table 3 and melt processed (5Kg/h, 50rpm and film speed: 5m/min) single blown film with a nominal thickness of 50µm through a die (50mm diameter, 0.5mm gap) using a single screw extrusion (diameter: 30mm, length: 25D), at set temperatures of 205°C.

For each masterbatch tested, the time until the melt fracture or shark-skin was eliminated from extruded blown film was recorded in Table 3.

**Table 3**

| Film Sample | Masterbatch | Time until Shark-Skin no longer visible |
|---|---|---|
| 9 ^{a)} | --- | Shark skin not eliminated |
| 10 | 1.5% MB-D | 40-60 min |
| 11 | 2.0% MB-D | 40 min |

## Claims

1. A use of a processing aid comprising a fatty acid salt to improve the flow properties of a melt comprising a thermoplastic polymer.

2. The use according to claim 1 where the melt comprises 0.01 to 4 wt%, preferably 0.05 to 2 wt%, more preferably from 0.1 to 1.5 wt% and in particular from 0.2 to 1.0 wt% of the fatty acid salt.

3. The use according to claim 1 or 2 where the fatty acid salt is a metal salt of a C₁₂-C₂₂ fatty acid.

4. The use according to any of claims 1 to 3 where the fatty acid salt is a metal stearate, preferably zinc stearate or calcium stearate.

5. The use according to any of claims 1 to 4 where the thermoplastic polymer is polypropylene, polyethylene, any polypropylene copolymer or any polyethylene copolymer or any of their blends.

6. The use according to any of claims 1 to 5 where the melt is processed by extrusion.

7. The use according to any of claims 1 to 6 where the melt is free of fluorine-based polymers.

8. The use according to any of claims 1 to 7 where the improved flow property is a reduced melt fracture.

9. The use according to any of claims 1 to 8 where the processing aid further comprises a phosphite or a phosphonate.

10. The use according to any of claims 9 where the processing aid further comprises a phosphite selected from tris(2,4-di-tert.-butylphenyl)phosphite.

11. The use according to any of claims 1 to 10 where the processing aid further comprises a phenolic antioxidants, preferably an alkylated monophenol, and in particular an ester of β-(3,5-di-tert-butyl-4-hydroxyphenyl)propionic acid with mono- or polyhydric alcohols.

12. A process for improving the flow properties of a melt comprising a thermoplastic polymer, which comprises the step of incorporating a processing aid comprising a fatty acid salt as defined in any of the preceding claims into the thermoplastic polymer prior to or during melt processing, where the thermoplastic polymer is free of a fluorine-based polymer.

13. The process according to claim 12 where the melt comprises 0.01 to 4 wt%, preferably 0.05 to 2 wt%, more preferably from 0.1 to 1.5 wt% and in particular from 0.2 to 1.0 wt% of the fatty acid salt.

14. The process according to claim 12 or 13 where the where the fatty acid salt is a metal salt of a C₁₂-C₂₂ fatty acid, preferably zinc stearate or calcium stearate.

15. The process according to any of claims 12 to 14 where the improved flow property is a reduced melt fracture.
